# EUROPÄISCHE PATENTSCHRIFT

(11) **EP 1 031 476 B1**
(45) Veröffentlichungstag und Bekanntmachung des Hinweises auf die Patenterteilung: **02.05.2003**
(21) Anmeldenummer: 99103693.0
(22) Anmeldetag: 25.02.1999
(51) Int. Cl.: B60R 21/32, G01B 11/27

(54) **Verfahren und Vorrichtung zum Erzeugen eines Positionsbildes eines Strahlung reflektierenden oder Strahlung streuenden Objekts oder einer Strahlung reflektierenden oder Strahlung streuenden Person**
Method and apparatus for generating the positional picture of an object reflecting or dispersing radiation or of a person reflecting or dispersing radiation
Méthode et dispositif générant une image de la position d' un objet réfléchissant ou dispersant un rayonnement ou d' une personne réfléchissant ou dispersant un rayonnement

(43) Veröffentlichungstag der Anmeldung: 30.08.2000
(73) Patentinhaber: SIEMENS AKTIENGESELLSCHAFT, 80333 München (DE)
(72) Erfinder: Roth, Christoph, Dr., Shinagawa-ku, Tokyo 141-8641 (JP); Hamperl, Reinhard, 93096 Köfering (DE); Rösl, Reinhard, 93173 Wenzenbach (DE); Waldmann, Alexander, 93059 Regensburg (DE); Stierle, Thomas, 93059 Regensburg (DE); Mader, Gerhard, Dr., 93107 Thalmassing (DE)

(56) Entgegenhaltungen:
- EP-A- 0 497 364
- EP-A- 0 734 921
- DE-A- 19 707 590

## Beschreibung

Die Erfindung betrifft eine Vorrichtung zum Erfassen eines Objektes oder einer Person im Innenraum eines Fahrzeugs gemäß Oberbegriff von Patentanspruch 1 sowie ein Betriebsverfahren für eine Vorrichtung zum Erfassen eines Objektes oder einer Person im Innenraum eines Fahrzeugs.

Weit in Richtung Armaturenbrett vorverlagerte Personen wie auch Kinder in sogenannten Reboard-Kindersitzen auf dem Beifahrersitz sind während des Fahrzeugbetriebes eines mit Airbag versehenen Kraftfahrzeuges der Gefahr ausgesetzt, durch die Aufblaswucht des Airbags bei einem Unfall Verletzungen zu erleiden. Moderne Steuerungssysteme für den Personenschutz sind bestrebt, den Airbag in derartigen Situationen abzuschalten oder mit verminderter Wucht aufzublasen, um die Gefahr einer Verletzung eines Insassen abzuwenden. Zur Ermittlung der Insassenposition im Fahrzeug werden vorzugsweise berührungslose, optische Sensoren eingesetzt.

Eine Vorrichtung gemäß dem Oberbegriff des Anspruchs 1 zum berührungslosen Erkennen eines Objektes oder einer Person im Innenraum eines Fahrzeugs ist aus der EP 0 669 227 A1 bekannt. Dabei wird der Fahrzeugsitz durch eine Anzahl von Leuchtdioden bestrahlt. Vom Sitz bzw. einer Person oder einem Objekt auf dem Fahrzeugsitz reflektierte Strahlen werden durch ein Fotodetektorfeld aufgenommen.

Der Einbauort einer solchen Vorrichtung im Fahrzeug, z.B. an der A-Säule, an der B-Säule oder am Dachhimmel, ggf. integriert mit der Innenraumbeleuchtung, kann vom Fahrzeughersteller im allgemeinen nur mit einer Toleranz von etwa plus fünf Prozent bezogen auf einen Fixpunkt im Fahrzeug angegeben werden. Fertigungsbedingte Toleranzketten in der Fahrzeugkarosserie lassen eine genauere Bestimmung des Einbauortes nicht zu. Eine Ortstoleranz von fünf Prozent hat jedoch für eine optisch abtastende Vorrichtung bereits eine Winkelabweichung des Strahlenganges von bereits maximal 18 Grad bezogen auf ein abzutastendes Fix-Objekt zur Folge. Bei einem angenommenen Funktionsbereich der Vorrichtung - auch Reichweite genannt - von einem Meter kann daher eine Meßpunktverschiebung von etwa 30 cm erfolgen. Eine solche Toleranz bei der Erfassung von Objekten oder Personen zum Zwecke der Airbagabschaltung oder der angemessenen Airbagdosierung ist aus sicherheitsrelevanten Gründen nicht hinnehmbar. Mögliche Gefahrensituationen werden aufgrund einer solchen unbestimmten Einbauposition der Vorrichtung nicht erkannt oder falsch beurteilt, da die Vorrichtung an sich zwar fehlerfrei arbeitet, jedoch aufgrund einer falschen Einbauposition nicht den ihr zugedachten Bereich überwacht.

Aufgabe der Erfindung ist es deshalb, ein Objekt oder eine Person im Innenraum eines Fahrzeugs toleranzgenau erfassen zu können.

Der die Vorrichtung betreffende Teil der Erfindungsaufgabe wird durch die Merkmale des Patentanspruchs 1 gelöst. Der das Verfahren betreffende Teil der Erfindungsaufgabe wird durch die Merkmale des Patentanspruchs 4 gelöst.

Weitere vorteilhafte Weiterbildungen der Erfindung sind durch die Unteransprüche gekennzeichnet.

Ausführungsbeispiele der Erfindung und ihrer Weiterbildungen werden anhand der Zeichnung näher erläutert. Es zeigen:
- Figur 1: einen Querschnitt einer Fahrgastzelle,
- Figur 2: eine Draufsicht auf ein Fahrzeug,
- Figur 3: eine erfindungsgemäße Vorrichtung in der Draufsicht,
- Figur 4: das erfindungsgemäße Verfahren, erläutert anhand eines Bestrahlungsschemas,
- Figur 5: einen Strahlungsintensitätsverlauf, aufgenommen bei der Anwendung des Bestrahlungsschemas nach Figur 4.

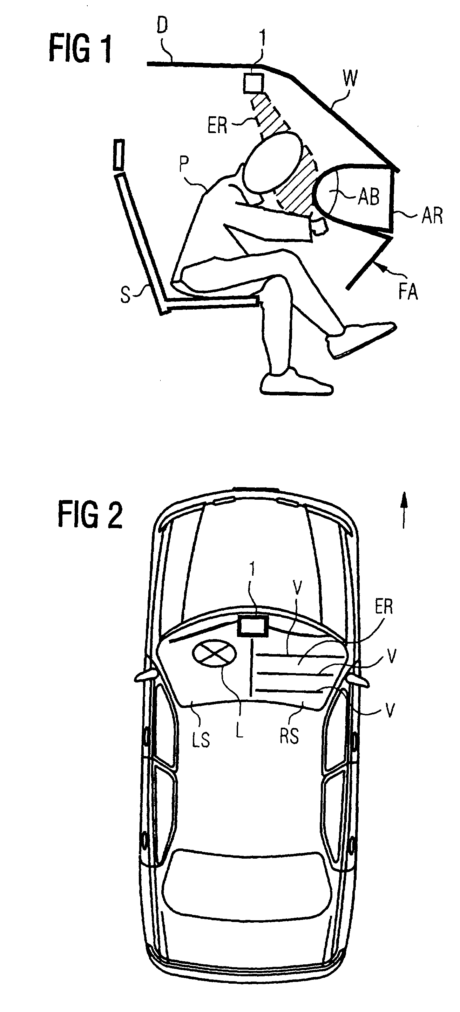

Figur 1 zeigt einen Querschnitt der vorderen Fahrgastzelle, beifahrerseitig, wobei alle Elemente symbolisch eingezeichnet sind. Dabei ist der Fahrzeuginnenraum durch ein Dach D, eine Windschutzscheibe W, ein Armaturenbrett AR und ein Fußablage FA begrenzt. Zur Abgrenzung des Fahrzeuginnenraums muß jedoch nicht notwendigerweise das Dach D und damit eine geschlossene Fahrgastzelle vorhanden sein. Es ist ein Fahrzeugsitz S ersichtlich, auf dem eine Person P in vorverlagerter Oberkörperposition sitzt. Am Dach D ist eine Vorrichtung 1 zum Erfassen eines Objektes oder einer Person in einer Einbauposition angeordnet. Diese Vorrichtung 1, und dabei insbesondere der Sensor der Vorrichtung weist einen eingezeichneten Wirkungsbereich ER auf. Der Sensor ist also derart räumlich ausgerichtet, daß er den Wirkungsbereich ER optisch abtasten kann. Das Armaturenbrett AR enthält ein Beifahrerairbagmodul AB im zusammengefalteten Zustand. In entfaltetem Zustand schießt der Beifahrerairbag in Richtung Kopf der eingezeichneten Person P. Es ist ersichtlich, daß mit der eingezeichneten Objekterfassungseinrichtung der Gefahrenbereich vor einem zusammengefalteten Airbagmodul AB in Aufblasrichtung überwacht werden soll. Wird ein Insasse oder ein Kindersitz in diesem Wirkungsbereich ER erkannt, so wird ein Auslösen des Beifahrerairbagmoduls AB verhindert oder geeignet dosiert. Die Vorrichtung 1 kann auch auf den Fahrzeugsitz S gerichtet sein und eine Abweichung einer Person aus seiner normalen Sitzposition erfassen. Es sind auch Vorrichtungen vorstellbar, die den gesamten vorderen Fahrzeuginnenraum mit einer Mehrzahl von Sensoren abtasten und jegliche Arten von Objektoder Personenpositionen aufnehmen können. Die Erfindung ist also nicht beschränkt auf das konkrete Erfassen eines Abbildes eines Objektes oder einer Person sondern insbesondere auch ausgebildet zur Überwachung eines bestimmten Bereiches oder einer bestimmten Zone im Fahrzeuginnenraum auf das Vorhandensein eines Objektes oder einer Person. Die Vorrichtung ist dabei insbesondere zur berührungslosen Erfassung ausgebildet.

Der Sensor der Vorrichtung tastet seinen Wirkungsbereich mittels optischer Strahlung, insbesondere infraroter Strahlung ab. Es sind aber auch Strahlungen mit anderen Wellenlängen anwendbar. Der Sensor enthält dabei ein Leuchtdiode, insbesondere einen Infrarotsender in Form einer Laserdiode, der eine oder mehrere Strahlen oder Strahlungsvorhänge aussendet. Der Sensor enthält ferner ein oder mehrere optische Empfangselemente in Form von Fotozellen, die die an einem Objekt oder einer Person reflektierte oder gestreute Strahlung aufnehmen. Durch Auswertung der reflektierten oder gestreuten Strahlung kann der Abstand zwischen dem Sensor und dem Objekt sowie gegebenenfalls eine Konturierung und genaue Positionsbestimmung im zwei- oder dreidimensionalen Raum bestimmt werden. Es kann aber auch eine Kamera zum Aufnehmen eines Bildes verwendet werden. Es kann ferner auch ein Wärmefühler in Form eines Infrarotaufnehmers zum Erkennen einer Person als Sensor vorgesehen sein. Der Sensor kann sich auch Ultraschallmessungen oder Mikrowellenmessungen durchführen.

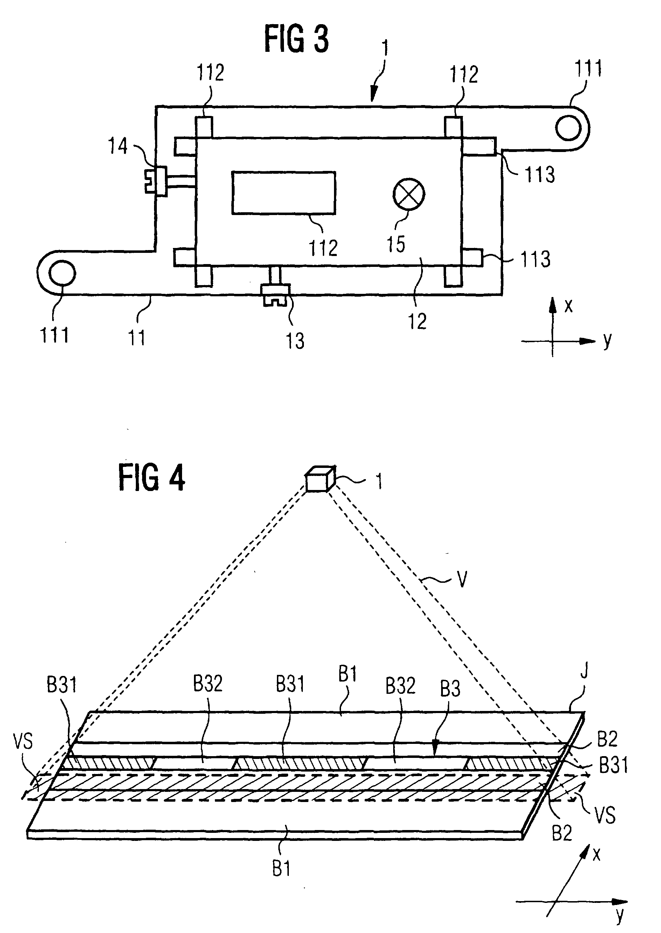

Figur 2 zeigt eine Draufsicht auf ein symbolisches Kraftfahrzeug, bei dem die Windschutzscheibe, die Heckscheibe sowie die Seitenscheiben als Ausschnitte ersichtlich sind. Im in Fahrtrichtung vorderen Bereich des Fahrzeuginnenraums ist eine erfindungsgemäße Vorrichtung 1 angeordnet. Ferner ist aus den Schaubildern die Fahrerseite LS mit dem Lenkrad L und die Beifahrerseite RS ersichtlich. Die Wirkungsrichtung W eines Sensors der Vorrichtung 1 ist durch ein gestricheltes Gebiet zum Ausdruck gebracht. Jeder Strich innerhalb des Wirkungssektors W kennzeichnet dabei einen optischen Vorhang V in der vertikalen Ebene. Jeder Vorhang V übt die Funktion einer Lichtschranke aus. Wird ein Objekt innerhalb des Wirkungssektors W des Sensors gebracht, so schneidet das Objekt zumindest einen der optischen Vorhänge V. Es ist eine dreidimensionale Personen- oder Objekterkennung gewährleistet, sofern ein zweidimensionales Empfangsfeld vorgesehen ist, und die dritte, vertikale Dimension durch eine Auswertung der Stärke, der Leistung oder des Energieinhalts einer reflektierten Strahlung im Laufzeit- oder Triangulationsverfahren gewonnen wird.

Figur 3 zeigt eine erfindungsgemäße Vorrichtung in der Draufsicht. Die Vorrichtung 1 enthält dabei eine Bodenplatte 11 mit Befestigungslaschen 111, zwei Längsführungen 112 sowie zwei Querführungen 113. Ferner enthält die Vorrichtung ein Gehäuse 12 und Justierschrauben 13 und 14.

Die Bodenplatte 11 trägt das die eigentlichen Funktionselemente der Vorrichtung 1 beinhaltende Gehäuse 12. Die vorzugsweise aus Kunststoff oder Metall hergestellte Bodenplatte 11 ist über ihre Befestigungslaschen an der für die Vorrichtung vorgesehenen Einbauposition an der Fahrzeugkarosserie oder einem anderen Bestandteil des Fahrzeugs beispielsweise über eine Schraubverbindung befestigt. Das Gehäuse 12 enthält nicht eingezeichnete Bauteile wie Sensor, Steuer- und/oder Auswerteschaltung, Schnittstelle, Stecker etc.. Das Gehäuse 12 ist in Y-Richtung verschiebbar auf den beiden Querführungen 113 angeordnet. Die Querführungen 113 ihrerseits sind wiederum in X-Richtung verschiebbar auf den beiden Längsführungen 112 angeordnet. Dabei ist das Gehäuse 12 gegen die Querführungen 113 wie auch die Querführungen 113 gegen die Längsführungen 112 gegen eine Feder vorgespannt. Die Justierschrauben 13 und 14 sind über eine Halterung mit der Bodenplatte 11 verbunden. Durch ein Anziehen der Justierschraube 13 wird das Gehäuse 12 mit dem Sensor zum Erfassen eines Objektes oder einer Person in X-Richtung abhängig von der Anzahl der getätigten Schraubumdrehungen gegen die Federkraft verschoben. Durch ein Umdrehen in der Justierschraube 14 wird das Gehäuse 12 mit dem Sensor gegen die Federkraft in Y-Richtung verschoben. Die Justierschrauben 13 und 14 bilden damit eine Justiereinrichtung zum Ändern der Einbauposition des Sensors bzw. der Vorrichtung im Fahrzeug nach seinem/ihrem Einbau im Fahrzeug über die Befestigungslaschen 111. Zusätzlich kann eine Justierschraube vorgesehen sein, die ein Schwenken der Vorrichtung bezüglich der in die Zeichenebene führenden Raumachse und damit eine Änderung der Ausrichtung des Sensors erlaubt. Die mechanische Verbindung zwischen dem Gehäuse und der Bodenplatte ist dann entsprechend anzupassen.

Die Justierschrauben 13 und 14 erlauben nach dem Einbau der Vorrichtung ins Fahrzeug eine zweidimensionale Änderung der Einbauposition des Sensors. Die maximal durch die Justierschrauben in den jeweiligen Richtungen erzielbaren Auslenkungen sind dabei vorzugsweise durch die von den Automobilherstellern in Längenmaße umgerechneten Toleranzangaben des Einbauortes bestimmt. Die Erfindung ist jedoch nicht auf eine gemäß Figur 3 beschriebene Justiereinrichtung beschränkt. Es können erfindungsgemäß auch anders konstruierte Justiereinrichtung zur Anwendung kommen, die zumindest ein Verschieben des Sensors oder aber der gesamten Vorrichtung zumindest in eine Raumrichtung erlauben. Die Vorrichtung bietet demnach die Möglichkeit, durch ein geeignetes Betriebsverfahren insbesondere den optischen Sensor der Vorrichtung derart in seiner Einbauposition festzulegen, daß er den ihm zugedachten Bereich des Kraftfahrzeuges überwacht. Damit ist eine exakte Objekt- oder Insassenerkennung gewährleistet, die als sicherer Informationsgeber das Aufblasen eines Airbags reduzieren oder unterdrücken kann.

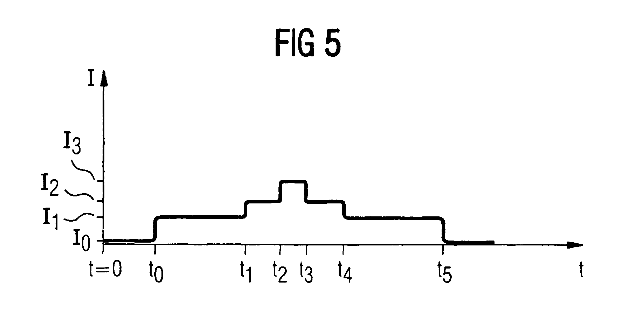

Ein erfindungsgemäßes Betriebsverfahren wird anhand der Figuren 4 und 5 erläutert. Gemäß Figur 4 werden in einem Testmodus des bereits im Fahrzeug verbauten Sensors bzw. der bereits im Fahrzeug verbauten Vorrichtung Daten aufgenommen. Die Position des Sensors wird abhängig von der Auswertung derartiger Erfassungsdaten mittels der Justiereinrichtung verändert. Durch das wiederholte Ausgeben von Strahlung und dem Aufnehmen der an einem Objekt reflektierten Strahlung kann die aktuelle Einbauposition des Sensors ermittelt werden. Weicht diese Einbauposition von einer vorgegebenen und vorzugsweise abgespeicherten Soll-Einbauposition ab, so wird der Sensor bzw. die Vorrichtung mittels der Justiereinrichtung entsprechend nachgeführt. Eine erneute Messung liefert die neue Einbauposition nach Betätigung der Justiereinrichtung, welche im folgenden wiederum mit der abgespeicherten Soll-Einbauposition verglichen wird. Dieses Betriebsverfahren wird solange weitergeführt, bis die Ist-Einbauposition mit der Soll-Einbauposition übereinstimmt.

Die Ansteuerung von optischen Sendern des Sensors wie auch die Auswertung von reflektierter Strahlung und der Abgleich derart aufgenommener Erfassungsdaten mit in einem Speicher abgelegten Daten erfolgt vorzugsweise durch einen Mikroprozessor. Das Nachstellen der Justiereinrichtung infolge einer Diskrepanz zwischen einer Soll-Einbauposition und der zumindest mittelbar ermittelten Ist-Einbauposition kann manuell erfolgen oder elektromechanisch, beispielsweise durch ein entsprechendes Stellsignal an eine elektromotorisch betätigbare Justiereinrichtung. Eine entsprechend ausgebildete elektromotorische Justiereinrichtung kann auch zu Justierzwecken am Band des Automobilherstellers auf die Vorrichtung oder den Sensor aufsteckbar ausgebildet sein. Eine Anzeigeeinrichtung teilt mit, wenn der Sensor bestmöglich ausgerichtet ist. Das Stellsignal dieser Justiereinrichtung kann daher als Justiersignal verstanden werden; ebenfalls das Signal zur Anzeige der erreichten bestmöglichen Ausrichtung des Sensors. Das Justiersignal kann aber auch eine optsiche oder akustische Anzeigeeinheit ansteuern und damit zum Ausdruck bringen, daß eine weiteres Änderen der Einbauposition oder der Ausrichtung erforderlich ist.

Zum Ermitteln der Ist-Einbauposition wird im Testmodus vorzugsweise ein optisches Signal auf ein ein markantes Muster enthaltendes Objekt gerichtet. Ein Muster dieses Objektes sollte insofern markant sein, als daß das Objekt Bereiche mit unterschiedlichen Reflektions- oder Streufaktoren aufweist. Gemäß Figur 4 wird als Objekt J eine Justierschablone in den Strahlenvorhang einer erfindungsgemäßen Vorrichtung 1 gebracht. Die Justierschablone J ist planar ausgebildet und enthält diverse Bereiche B, wobei insbesondere drei Bereiche B1 bis B3 mit unterschiedlichen Reflektions- oder Streufaktoren vorgesehen sind. Die äußeren Bereiche B1 weisen dabei geringe Streuneigung auf. In den Bereichen B2 ist Streuneigung B2>B1. Der mittlere Bereich B3 weist hingegen eine ausgeprägte Streuneigung auf. Die Reflektionsfreudigkeit bzw. Streuneigung einer solchen Justierschablone wird hervorgerufen durch ihre Oberflächenrauhigkeit, ihre Farbe, ihre Spiegeleineigenschaften, das zugrundegelegte Material etc.. Im Beispiel nach Figur 4 überdeckt der Vorhang V Ränder der Bereiche B1 und B2 mit seinem auf die Justierschablone J projizierten Feld VJ. Ein optischer Empfänger der Vorrichtung 1 wird daher eine reflektierte Strahlung geringer bis mittlerer Intensität wahrnehmen. Durch Vergleich dieser Intensität mit einer Sollintensität wird mittels einer Justiereinrichtung der Vorrichtung der Sensor derart verstellt, daß sich sein Strahlengang V in X-Richtung verschiebt. Das Feld VJ auf der Justierschablone J überdeckt damit zunehmend Bereiche B2 mit höherer Reflexionseigenschaft. Ein Auswerter der Vorrichtung 1 erkennt die erhöhte Intensität der reflektierten Strahlung anhand der Auswertung der vom Sensor gelieferten Erfassungsdaten. Der Sensor wird mittels der Justiereinrichtung soweit in X-Richtung verstellt, bis entweder ein Intensitätsgrenzwert der reflektierten Strahlung erreicht wird, oder bis ein Intensitätsmaximum im reflektierten Signal überschritten wurde. Alternativ kann dann die Soll-Einbauposition als erreicht gelten, wenn der ermittelte Intensitätswert innerhalb enger Toleranzen eines Soll-Intensitätswetres liegt.

Nach erfolgter Justierung des Sensors in X-Richtung kann die Positioniereinrichtung für die X-Richtung arretiert werden. Liefert der Sensor der Vorrichtung 1 mehrere Strahlenvorhänge V, so genügt es, den Sensor anhand eines Strahlenvorhangs V zu justieren, sofern die Sender der einzelnen Strahlenvorhänge mechanisch miteinander gekoppelt sind.

Nach dem Justieren des Sensors in X-Richtung kann der Sensor in Y-Richtung justiert werden, sofern er für die Y-Richtung empfindlich ist. Der Sensor kann dabei gemäß dem vorliegenden Beispiel vorzugsweise fünf einem Sender zugeordneten Fotoempfänger aufweisen, die Intensitätsunterschiede in Y-Richtung erkennen lassen. Die Justierschablone wiederum weist zur Justierung des Sensors in Y-Richtung in ihrem Bereich B3 fünf Felder auf mit unterschiedlicher Streuneigung auf. Die mit B31 gekennzeichneten Felder weisen dabei einen geringeren Reflektionsfaktor als die mit B32 gekennzeichneten Felder auf. Die Justierung in Y-Richtung erfolgt gemäß dem vorstehenden Verfahren der Justierung des Sensors in X-Richtung.

Die Justierschablone sollte hinsichtlich einer größtmöglichen Empfindlichkeit des Justierverfahrens in einer maximal möglichen Entfernung vom Sensor angeordnet werden. Dabei kann die Justierschablone beispielsweise zwischen den beiden Vordertüren des Kfz angeordnet werden, so daß die Reflexionsoberseite über den gesamten vorderen Insassenraum verläuft. Es ist auf eine ortsgenaue Aordnung der Justierschablone zu achten, da sie die Grundlage für die Ausrichtung des Sensors darstellt. Dieses Betriebsverfahren wird vorzugsweise bei Inbetriebnahme der Vorrichtung im Fahrzeug angewendet. Es kann auch bei einem Aufenthalt des Fahrzeugs in der Werkstatt zur Routineüberprüfung oder zur Reparatur angewendet werden.

Bei einem weiteren erfindungsgemäßen Verfahren wird ein Strahlenvorhang des Sensors auf ein eindeutig wiedererkennbares Objekt gerichtet, beispielsweise also auf einen Sitzausschnitt, den Ganghebel oder die Mittelkonsole. Bei korrekter Ausrichtung liefert das reflektierte Signal eine vorgegebene Intensität, die als Größe für eine Soll-Einbauposition in einem Speicher der Vorrichtung gespeichert ist. Weicht die Einbauposition des Sensors wiederum von der Soll-Einbauposition des Sensors ab, so wird der Sensor über die Justiereinrichtung nachgestellt. Es kann aber auch die Erkennung eines eindeutigen Streumusters im Objekt abgezielt werden. Die bestögliche Ausrichtung des Sensors gilt dann als erkannt, wenn das aufgenommene Muster mit einem abgespeicherten Muster weitgehend übereinstimmt. Die weitgehende Übereinstimmung wird dabie durch eine Abweichung in engen Grenzen von dem vorgegebenen Muster bestimmt.

Vorteil dieses Betriebsverfahrens ist es, daß eine Justierung auch nach der erstmaligen Inbetriebnahme der Vorrichtung im Fahrzeug durchgeführt werden kann. Dabei wird dieses Betriebsverfahren vorzugsweise dann durchgeführt, wenn die Türen des Fahrzeugs verriegelt sind. Ein Türverriegelung liefert einen Anhaltspunkt dafür, daß das Fahrzeug verlassen wurde und das zu Justierzwecken ausgewählte Objekt nicht durch Personen oder Gegenstände verdeckt wird.

Figur 5 zeigt die Aufnahme von Intensitäten als Erfassungsdaten über der Zeit t bei einem zeitlichen Schwenken des Sensors über die Justierschablone gemäß Figur 4 in X-Richtung, beginnend außerhalb der Justierschablone in der Zeit T=0 und T₀. Die Verschiebungsgeschwindigkeit des Sensors ist dabei konstant. Die erfaßten unterschiedlichen Intensitäten I₁ bis I₃ lassen das Überstreichen der Bereiche B1 bis B3 durch den Strahlenvorhang erkennen.

Mit dem erfindungsgemäßen Verfahren und der erfindungsgemäßen Vorrichtung kann eine toleranzarme Einbauposition des Sensors geschaffen werden, ohne daß mechanische Eingriffe am Sensor selbst erforderlich sind.

## Patentansprüche

1. Vorrichtung zum Erfassen eines Objektes oder einer Person im Innenraum eines Fahrzeugs, mit einem Sensor dafür und mit Befestigungsmitteln zum Befestigen der Vorrichtung (1) am Fahrzeug in einer Position und mit einer Ausrichtung für den Sensor, **dadurch gekennzeichnet, daß** eine Justiereinrichtung vorgesehen ist zum Ändern der Position oder der Ausrichtung des Sensors oder der Vorrichtung (1) im Fahrzeug nach seinem/ihrem Einbau, wobei der Sensor einen Sender zum Ausgeben eines Signals und einen Empfänger zum Aufnehmen des an dem Objekt oder der Person reflektierten oder gestreuten Signals aufweist, und desweiteren eine Auswerteeinheit vorgesehen ist zum Ausgeben eines Steuersignals an die Justiereinrichtung in Abhängigkeit von dem empfangenen Sensorsignal.

2. Vorrichtung nach Anspruch 1, **dadurch gekennzeichnet, daß** die Justiereinrichtung zumindest eine Positionierschraube (13,14) zum Ändern der Position oder der Ausrichtung des Sensors oder der Vorrichtung (1) enthält.

3. Vorrichtung nach Anspruch 1 oder Anspruch 2, **dadurch gekennzeichnet, daß** die Justiereinrichtung ausgebildet ist zur Änderung der Position oder der Ausrichtung des Sensors oder der Vorrichtung (1) in zwei Raumrichtungen.

4. Betriebsverfahren für eine Vorrichtung zum Erfassen eines Objektes oder einer Person im Innenraum eines Fahrzeugs,
- bei dem ein im Fahrzeug verbauter Sensor zum Erfassen eines Objektes oder einer Person in einem Testmodus betrieben wird,
- bei dem im Testmodus erfaßte Daten ausgewertet werden und
- bei dem abhängig von dem Ergebnis der Auswertung die Position oder die Ausrichtung des Sensors oder der Vorrichtung (1) im Fahrzeug mittels einer Justiereinrichtung verändert wird.

5. Betriebsverfahren nach Anspruch 4,
- bei dem im Testmodus ein Objekt durch einen Sender des Sensors bestrahlt wird,
- bei dem das Objekt Bereiche mit sich voneinander unterscheidenden Streu- oder Reflexionseigenschaften enthält und
- bei dem die an dem Objekt reflektierte oder gestreute Strahlung aufgenommen wird und die derart gewonnenen Daten ausgewertet werden.

6. Betriebsverfahren nach Anspruch 5,
- bei dem die erfaßten Daten ein Streu- oder Reflexionsmuster des bestrahlten Objektes wiedergeben,
- bei dem die erfaßten Daten mit abgespeicherten Daten für ein vorgegebenes Streu-oder Reflexionsmuster verglichen werden und
- bei dem die Position oder die Ausrichtung des Sensors oder der Vorrichtung verändert wird oder das Justiersignal erzeugt wird, wenn die erfaßten Daten von den gespeicherten Daten mindestens um einen vorgegebenen Wert abweichen.

7. Betriebsverfahren nach Anspruch 6, bei dem der Testmodus nach dem Verriegeln der Fahrzeugtür gestartet wird.

8. Verfahren nach Anspruch 5,
- bei dem die erfaßten Daten zur Ermittlung eines Intensitätsmaximums der reflektierten oder gestreuten Strahlung ausgewertet werden.

9. Betriebsverfahren nach Anspruch 8,
- bei dem die Position oder die Ausrichtung des Sensors oder der Vorrichtung verändert wird oder das Justiersignal erzeugt wird, solange der Sensor noch nicht diejenige Position oder diejenige Ausrichtung erreicht hat, in der die reflektierte oder gestreute Strahlung ihr Intensitätsmaximum aufweist.

10. Verfahren nach einem der Ansprüche 4 bis 9,
- bei dem die Vorrichtung oder der Sensor in derjenigen Position oder derjenigen Ausrichtung verriegelt wird, in der die reflektierte oder gestreute Strahlung ihr Intensitätsmaximum aufweist oder in der die erfaßten Daten von den gespeicherten Daten den vorgegebenen Wert unterschreiten.

## Claims

1. Device for sensing an object or a person in the interior of a vehicle, having a sensor for that purpose and having attached means for attaching the device (1) to the vehicle in a position and with an orientation for the sensor, **characterized in that** an adjustment device is provided for changing the position or orientation of the sensor or the device (1) in the vehicle after its installation, the sensor having a transmitter for outputting a signal and a receiver for picking up the signal which is reflected or scattered at the object or the person, and an evaluation unit also being provided for outputting a control signal to the adjustment device as a function of the received sensor signal.

2. Device according to Claim 1, **characterized in that** the adjustment device contains at least one positioning screw (13, 14) for changing the position or the orientation of the sensor or of the device (1).

3. Device according to Claim 1 or Claim 2, **characterized in that** the adjustment device is designed to change the position or the orientation of the sensor or of the device (1) in two spatial directions.

4. Operating method for a device for sensing an object or a person in the interior of a vehicle,
- in which a sensor which is installed in the vehicle for the purpose of sensing an object or a person is operated in a test mode,
- in which data sensed in the test mode is evaluated and
- in which the position or the orientation of the sensor or of the device (1) in the vehicle is changed by means of an adjustment device as a function of the result of the evaluation.

5. Operating method according to Claim 4,
- in which, in the test mode, an object is irradiated by a transmitter of the sensor,
- in which the object contains regions with scattering or reflection properties which differ from one another, and
- in which the radiation reflected or scattered at the object is picked up and the data which is acquired in this way is evaluated.

6. Operating method according to Claim 5,
- in which the sensed data represents a scattering or reflection pattern of the irradiated object,
- in which the sensed data is compared with stored data for a predefined scattering or reflection pattern, and
- in which the position or the orientation of the sensor or of the device is changed, or the adjustment signal is generated if the sensed data differs from the stored data, at least by a predefined value.

7. Operating method according to Claim 6,
in which the test mode is started after the vehicle door is locked.

8. Method according to Claim 5,
- in which the sensed data is evaluated in order to determine an maximum intensity of the reflected or scattered radiation.

9. Operating method according to Claim 8,
- in which the position or the orientation of the sensor or of the device is changed or the adjustment signal is generated as long as the sensor has not yet reached that position or that orientation in which the reflected or scattered radiation has its maximum intensity.

10. Method according to one of Claims 4 to 9,
- in which the device or the sensor is locked in that position or that orientation in which the reflected or scattered radiation has its maximum intensity or in which the sensed data drops below the predefined value of the stored data.

## Revendications

1. Dispositif pour détecter la présence d'un objet ou d'une personne dans l'espace intérieur d'un véhicule automobile, avec, en vue de cette détection, un détecteur et des moyens de fixation pour fixer le dispositif (1) sur le véhicule automobile dans une position, et avec une orientation pour le détecteur,
**caractérisé en ce qu'**il est prévu un dispositif d'ajustement pour modifier la position ou l'orientation du détecteur ou du dispositif (1) dans le véhicule automobile après sa mise en place, le détecteur présentant un émetteur pour émettre un signal et un récepteur pour recevoir le signal réfléchi ou diffusé sur l'objet ou la personne, et une unité d'interprétation étant, de plus, prévue pour émettre un signal de commande vers le dispositif d'ajustement en fonction du signal de détecteur reçu.

2. Dispositif suivant la revendication 1, **caractérisé en ce que** le dispositif d'ajustement comporte au moins une vis de positionnement (13, 14) pour modifier la position ou l'orientation du détecteur ou du dispositif (1).

3. Dispositif suivant la revendication 1 ou la revendication 2, **caractérisé en ce que** le dispositif d'ajustement est réalisé pour modifier la position ou l'orientation du détecteur ou du dispositif (1) dans deux directions.

4. Procédé de fonctionnement pour un dispositif destiné à détecter la présence d'un objet ou d'une personne dans l'espace intérieur d'un véhicule automobile, selon lequel
- un détecteur monté dans le véhicule automobile pour détecter un objet ou une personne fonctionne suivant un mode test,
- = des données détectées en mode test sont interprétées, et
- en fonction du résultat de l'interprétation, la position ou l'orientation du détecteur ou du dispositif (1) dans le véhicule automobile est modifiée au moyen d'un dispositif d'ajustement.

5. Procédé de fonctionnement suivant la revendication 4, selon lequel
- en mode test, un objet est soumis à un rayonnement par l'émetteur du détecteur,
- l'objet comporte des zones présentant des propriétés de diffusion ou de réflexion différentes les unes des autres, et
- le rayonnement réfléchi ou diffusé sur l'objet est détecté et les données ainsi obtenues sont interprétées.

6. Procédé de fonctionnement suivant la revendication 5, selon lequel
- les données détectées fournissent un modèle de réflexion ou de diffusion de l'objet soumis au rayonnement,
- les données détectées sont comparées à des données mises en mémoire pour un modèle de réflexion ou de diffusion prédéfini, et
- la position ou l'orientation du détecteur ou du dispositif est modifiée, ou le signal d'ajustement est produit, si les données détectées s'écartent des données en mémoire, d'une valeur prédéfinie.

7. Procédé de fonctionnement suivant la revendication 6, selon lequel
- le mode test est lancé après le verrouillage de la porte du véhicule automobile.

8. Procédé suivant la revendication 5, selon lequel
- les données détectées sont interprétées pour déterminer un maximum d'intensité du rayonnement réfléchi ou diffusé.

9. Procédé de fonctionnement suivant la revendication 8, selon lequel
- la position ou l'orientation du détecteur ou du dispositif est modifiée, ou le signal d'ajustement est produit aussi longtemps que le détecteur n'a pas encore atteint la position ou l'orientation dans laquelle le rayonnement réfléchi ou diffusé présente son maximum d'intensité.

10. Procédé suivant l'une des revendications 4 à 9, selon lequel
- le dispositif où le détecteur est verrouillé dans la position choisie ou l'orientation choisie, dans laquelle le rayonnement réfléchi ou diffusé présente son intensité maximale, ou dans laquelle les données détectées dépassent vers le bas, de la valeur prédéfinie, les données en mémoire.
